Europäisches Patentamt

European Patent Office

Office européen des brevets

(11) Veröffentlichungsnummer: **0 474 030 A2**

# EUROPÄISCHE PATENTANMELDUNG

(21) Anmeldenummer: **91113973.1**

(22) Anmeldetag: **21.08.91**

(51) Int. Cl.5: **B29C 67/14**, B29C 43/52

(30) Priorität: **06.09.90 DE 4028215**

(43) Veröffentlichungstag der Anmeldung:
**11.03.92 Patentblatt 92/11**

(84) Benannte Vertragsstaaten:
**BE DE FR GB NL**

(71) Anmelder: **Otto Sauer Achsenfabrik Keilberg**
**Hauptstrasse 26**
**W-8751 Bessenbach-Keilberg(DE)**

(72) Erfinder: **Volk, Peter, Dr.-Ing.**
**Mont meyraner Strasse 13**
**6101 Gross-Bieberau(DE)**
Erfinder: **Koschinat, Hubert, B.**
**Hangstrasse 13**
**8750 Hösbach(DE)**

(74) Vertreter: **Keil, Rainer A., Dipl.-Phys. Dr. et al**
**KEIL & SCHAAFHAUSEN Patentanwälte**
**Eysseneckstrasse 31**
**W-6000 Frankfurt am Main 1(DE)**

(54) Anlage zum Herstellen von Achsfedern, Achslenkern od. dgl. Farhzeugbauteilen.

(57) Die Erfindung bezieht sich auf eine Anlage zum Herstellen von Fahrzeugbauteilen aus Faserverbundwerkstoffen mit wenigstens folgenden Verfahrensschritten:

- Vorwärmen einer Abpreßform auf eine Vorwärmtemperatur,
- Einlegen eines Vorformlings aus kunststoffimprägnierten Glasfaserbändern in die vorgewärmte Abpreßform,
- Spannen des Formoberteils gegenüber dem in dem Formunterteil eingelegten Vorformling auf einen ersten Druck,
- Erwärmen der Abpreßform mit dem Vorformling in einem ersten Ofen auf eine Abpreßtemperatur bis zu einer ausreichend niedrigen Viskosität des Kunststoffs,
- Nachspannen des Formoberteils gegenüber dem Vorformling auf einen zweiten Druck, und
- Erwärmen der Abpreßform mit dem bereits erwärmten Vorformling in einem zweiten Ofen auf eine Aushärtetemperatur,

wobei zur Verbesserung der Qualität der hergestellten Bauteile wenigstens der erste und der zweite Ofen als Durchgangsöfen ausgebildet und auf einer Durchlaufstrecke für die Abpreßform in Durchlaufrichtung hintereinander und gegeneinander verschiebbar angeordnet sind.

FIG.1

Die Erfindung bezieht sich auf eine Anlage zum Herstellen von Achsfedern, Achslenkern od. dgl. Fahrzeugbauteilen aus Faserverbundwerkstoffen mit wenigstens folgenden Verfahrensschritten:

- Vorwärmen einer ein die Unterkontur des Bauteils bestimmendes Formunterteil und ein die Oberkontur des Bauteils bestimmendes, mit veränderlichem Druck diesem gegenüber spannbares Formoberteil aufweisenden Abpreßform auf eine Vorwärmtemperatur,
- Einlegen eines z.B. aus kunststoffimprägnierten Glasfaserbändern hergestellten Vorformlings in die vorgewärmte Abpreßform,
- Spannen des Formoberteils gegenüber dem in dem Formunterteil eingelegten Vorformling auf einen vorgegebenen, vorzugsweise über einen bestimmten Setzweg im wesentlichen konstanten ersten Druck,
- Erwärmen der Abpreßform mit dem einlegbaren Vorformling, z.B. unter Aufrechterhaltung des ersten Druckes, in einem ersten Ofen auf eine vorgegebene Abpreßtemperatur bis zu einer ausreichend niedrigen Viskosität des Kunststoffs,
- Nachspannen des Formoberteils gegenüber dem Vorformling auf einen vorgegebenen, mit dem ersten Druck im wesentlichen gleichen oder gegenüber dem ersten Druck erhöhten, vorzugsweise über einen bestimmten Setzweg im wesentlichen konstanten zweiten Druck, und
- Erwärmen der Abpreßform mit dem bereits erwärmten Vorformling, z.B. unter Aufrechterhaltung des zweiten Druckes, in einem zweiten Ofen auf eine vorgegebene, gegenüber der Abpreßtemperatur erhöhten Aushärtetemperatur.

Bisher hat man Achsfedern, Achslenker od. dgl. Fahrzeugbauteile aus Faserverbundwerkstoffen dadurch hergestellt, daß ein Vorformling, welcher aus kunststoffimprägnierten Glasfaserbändern als Schichtkörper gewickelt wurde, z.B. in einer selbst beheizbaren Abpreßform unter Druck und erhöhter Temperatur in die endgültige Form der Achsfeder, des Achslenkers oder des sonstigen Fahrzeugbauteils geformt und ausgehärtet wurde (vgl. z.B. die EP-A-0 158 623). Hierfür werden erhebliche Fertigungszeiten von bis zu einer Stunde pro Bauteil benötigt. Außerdem ist die beheizbare Preßform sehr kostenaufwendig, so daß bei einem vorgegebenen Investitionsaufwand nur eine begrenzte Stückzahl parallel betrieben werden kann. Um den Ausstoß zu erhöhen, hat man auch bereits Mehrfachformen dieser Art vorgeschlagen, innerhalb welcher mehrere Bauteile gleichzeitig aus mehreren Vorformlingen in ihre endgültige Form gebracht und ausgehärtet werden können. Derartige Mehrfachformen sind jedoch noch teurer und wenig geeignet, auf definierte Verfahrensbedingungen eingestellt zu werden. Ferner haben sich bei den bekannten beheizbaren Preßformen wegen der Erwärmung auf Aushärtungstemperatur bei gleichzeitiger Druckbeaufschlagung Ungleichmäßigkeiten in der Struktur des fertigen Bauteils ergeben, wodurch bspw. Spannungsrisse nicht vermieden werden können.

Diese Nachteile können bei einem Verfahren der eingangs genannten Art vermieden werden, weil auf diese Weise erreicht wird, daß die Viskosität der verwendeten Kunststoffe zunächst nur in einem gewissen Maß bis zur Verformbarkeit des Vorformlings erniedrigt wird, während die Wärmezufuhr für die Aushärtung des Kunststoffes erst im Anschluß daran nach dem Verformen des Vorformlings in die endgültige Gestalt des Bauteils in einem weiteren Verfahrensschritt zugeführt wird. Bei diesem lediglich in der Erprobung befindlichen und nicht dem Stand der Technik angehörenden Verfahren ist eine Einstellung auf spezielle Verfahrens- und Materialbedingungen, bspw. unterschiedliche Querschnitte der Bauteile, unterschiedliche Qualität der Werkstoffe, unterschiedliche Eigenschaften der verwendeten Kunststoffe bzw. Harze u. dgl. nicht möglich.

Hiervon ausgehend ist es Aufgabe der vorliegenden Erfindung, eine Anlage der gattungsgemäßen Art zu schaffen, bei welcher zur Verbesserung der Qualität der erzeugten Fahrzeugbauteile eine differenzierte Verfahrensführung hinsichtlich Temperatur und/oder Druck über den gesamten Herstellungsprozeß möglich ist.

Diese Aufgabe wird erfindungsgemäß im wesentlichen dadurch gelöst, daß wenigstens der erste und der zweiten Ofen als Durchlaufofen ausgebildet und auf einer Durchlaufstrecke für die Abpreßform in Durchgangsrichtung hintereinander und gegeneinander verschiebbar angeordnet sind.

Auf diese Weise ist es möglich, vor, zwischen und nach den beiden Öfen in veränderlicher Weise andere Verfahrensschritte, bspw. das Spannen und/oder Nachspannen der Abpreßform und Platz für die dabei erforderlichen manuellen oder automatischen Eingriffe vorzusehen sowie festzulegen, in welcher zeitlichen Folge und Dauer die Abpreßform einzelnen Temperaturbereichen ausgesetzt wird. Dadurch werden bei individueller Ausgestaltungsmöglichkeit des Verfahrensablaufs wesentlich verkürzte Taktzeiten erreicht und es kann mit einer Vielzahl kostengünstiger Abpreßformen gearbeitet werden, da diese selbst nicht beheizbar sein müssen.

Eine noch differenziertere Verfahrensweise und Berücksichtigung spezieller Herstellungsvoraussetzungen und -parameter ist dann möglich, wenn der erste und/oder der zweite Ofen in einzeln steuerbare Behandlungseinheiten unterteilt sind bzw. ist.

Die selbständige Steuerbarkeit der Behandlungseinheiten bezieht sich insbesondere auf deren Tempratur, so daß mit Hilfe der einzelnen für die Behandlungseinheiten vorgewählten Temperaturen jeweils ein spezielles Temperaturprofil über den gesamten Durchlauf der Abpreßform auf der Durchlaufstrecke erreicht werden kann. Hierbei können auch unterschiedliche Durchlaufgeschwindigkeiten der Abpreßform durch die beiden Öfen bzw. deren einzelnen Baueinheiten berücksichtigt werden.

Die einzelnen Behandlungseinheiten des einen oder anderen Ofens können ebenfalls in Durchlaufrichtung gegeneinander verschiebbar angeordnet sein, so daß auch dadurch zwischen den einzelnen Behandlungseinheiten manuelle oder automatische Eingriffe bzw. andere Verfahrensschritte wie Spannen oder Nachspannen eingeschoben werden können.

Um die Taktzeit für die Herstellung der Fahrzeugbauteile weiter zu verkürzen, ist es ferner von Vorteil, dem letzten Ofen bzw. der letzten Behandlungseinheit in Durchlaufrichtung der Durchlaufstrecke der Abpreßform eine Abkühleinheit oder mehrere Abkühleinheiten nachzuordnen. Hierdurch wird der Abkühlvorgang beschleunigt und die Abpreßform kann zum Herausnehmen des fertigen Bauteils rasch geöffnet und der Wiederverwendung in dem Fertigungszyklus zugeführt werden. In einer erfindungsgemäßen Anlage können gleichzeitig bspw. zwanzig Abpreßformen umlaufen, so daß die Fertigungstaktzeit bei fünf Minuten liegt. Diese verhältnismäßig große Anzahl von Abpreßformen ist deswegen zu vertreten, weil sie im Gegensatz zu den herkömmlichen selbstbeheizbaren Abpreßformen sehr kostengünstig hergestellt werden können.

Im Rahmen der Erfindung ist es ferner möglich, dem ersten Ofen bzw. der ersten Behandlungseinheit in Durchlaufrichtung der Durchlaufstrecke der Abpreßform eine Vorwärmeinheit oder mehrere Vorwärmeinheiten vorzuschalten. Diese kann der Vorwärmung der noch leeren Abpreßform vor dem Einlegen des Vorformlings im Durchlaufverfahren dienen. Auf eine Vorwärmeinheit kann allerdings verzichtet werden, wenn eine Abpreßform des vorherigen Durchlaufs verwendet und diese beim Abschluß des Herstellungsverfahrens lediglich auf eine Temperatur abkühlt, welche der gewünschten Vorwärmtemperatur für den neuen Verfahrensdurchlauf entspricht.

Die unterschiedliche Gestaltungsmöglichkeit des Verfahrensprozesses wird dann noch weiter erhöht, wenn gemäß einer noch anderen Weiterbildung der Erfindung die Öfen und/oder die Behandlungseinheiten und/oder die Abkühleinheiten und/oder die Vorwärmeinheiten einzeln oder mehrere gemeinsam aus der Durchlaufstrecke herausverfahrbar angeordnet sind, also bspw. seitlich aus der Durchlaufstrecke herausgefahren werden können.

Hierdurch kann Platz zwischen den einzelnen Öfen und/oder Behandlungseinheiten geschaffen werden, wenn einzelne Behandlungseinheiten, Vorbehandlungseinheiten oder Nachbehandlungseinheiten bei einem bestimmten Herstellungsprozeß nicht benötigt werden.

Beim Betreiben der erfindungsgemäßen Anlage hat es sich als zweckmäßig erwiesen, daß der erste Ofen und/oder die den ersten Ofen bildenden Behandlungseinheiten auf eine Abpreßtemperatur zwischen etwa 100 und 140° C einregelbar ist bzw. sind, da hierdurch in der Regel die gewünschte geringe Viskosität des Kunststoffs bzw. Harzes des Vorformlings erreicht werden kann.

Für den zweiten Ofen und/oder die den zweiten Ofen bildenden Behandlungseinheiten wird eine Einregelbarkeit der Aushärtetemperatur zwischen etwa 140° und 160° C als besonders vorteilhaft vorgeschlagen. In diesem Bereich lassen sich bei den in Frage kommenden Kunststoffen bzw. Harzen für die Fertigung von Achsfedern, Achslenkern u. dgl. Fahrzeugbauteilen optimale Qualitäten erzielen.

Für die Vorwärmeinheit(en) hat sich im Rahmen der erfindungsgemäßen Anlage eine Temperatur zwischen etwa 80 und 100° C als zweckmäßig erwiesen.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Fig. 1    schematisch im Vertikalschnitt eine beim Betreiben der erfindungsgemäßen Anlage zu verwendende Abpreßform,

Fig. 2    ein Verfahrensschema für die Herstellung von Achsfedern, Achslenkern u. dgl. Fahrzeugbauteilen mit Hilfe einer erfindungsgemäßen Anlage, sowie

Fig. 3    schematisch die Anordnung und Verfahrbarkeit der Einheiten für Vorwärmen, Temperaturbehandlung während des Abpressens und Aushärtens sowie Abkühlen im Rahmen einer erfindungsgemäßen Anlage.

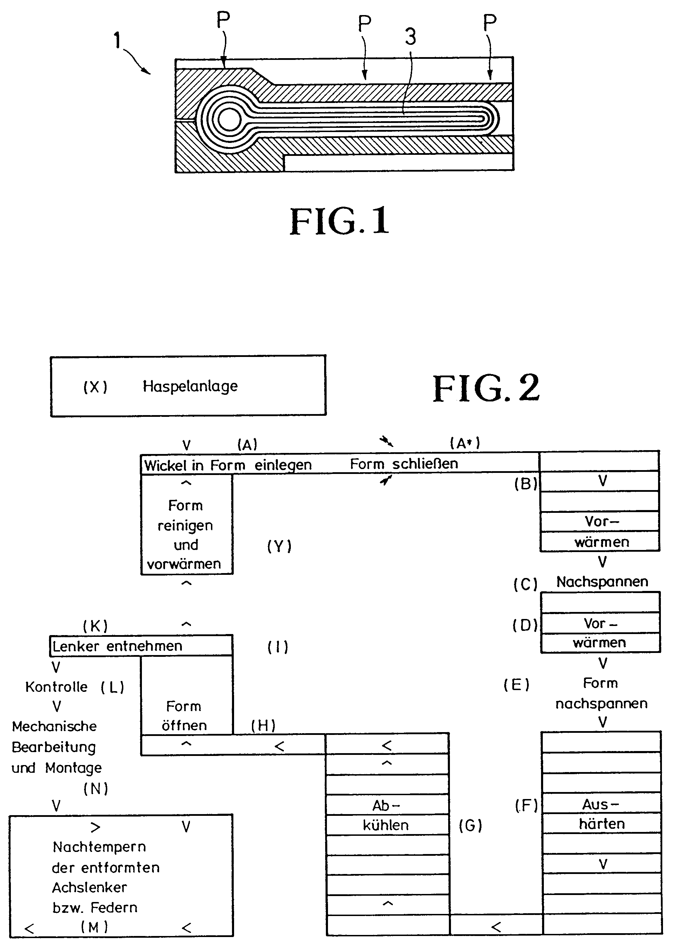

Die in Fig. 1 schematisch dargestellte Abpreßform 1 dient der Herstellung eines Achslenkers aus Faserverbundwerkstoff. Die Abpreßform 1 hat einen die Unterkontur des Fahrzeugbauteils bestimmendes Formunterteil 2 sowie ein mit veränderlichem Druck P gegenüber einem eingelegten Vorformling 3 spannbares, die Oberkontur des Bauteils bestimmendes Formoberteil 4. In der Zeichnung ist angedeutet, daß der Vorformling 3 durch Aufwickeln eines kunststoffimprägnierten Glasfaserbandes in einer Haspelanlage hergestellt worden ist. Diese ist in Fig. 2 bei X veranschaulicht.

Gemäß Fig. 2 wird die Abpreßform bei Y gereinigt und bspw. auf eine Temperatur von 90° vorgewärmt. Danach wird der gewickelte Vorformling bei A in die Anpreßform 1 eingelegt und letztere danach unter vorgegebener Spannung bei A* geschlossen. Die Abpreßform 1 mit dem Vorformling 3 durchläuft dann zunächst einen ersten Durchlaufofen, bestehend aus einer Einheit B und einer Einheit D zum Vorwärmen der Abpreßform 1 einschließlich des Vorformlings 3 bis auf eine Temperatur, welche den Kunststoff bzw. das Harz auf eine gewünschte geringe Viskosität bringt. Dies ist in der Regel bei einer Temperatur zwischen etwa 100 und 140° C der Fall. Die beiden Vorwärmstufen B und D des ersten Durchlaufofens können noch, wie dargestellt, in einzelne Behandlungseinheiten unterteilt sein. Zwischen den Vorwärmstufen B und D ist ein Zwischenraum C gelassen, in welchem die Abpreßform 1 manuell oder automatisch nachgespannt werden kann, um dem während der ersten Vorwärmstufe B in der Abpreßform 1 eintretenden Druckabfall Rechnung zu tragen. Nach der zweiten Vorwärmtufe D ist bei E ein weiterer Zwischenraum für die Möglichkeit eines abermaligen manuellen oder automatischen Nachspannens der Abpreßform 1 vorgesehen. Von da aus durchläuft die Abpreßform 1 bei F einen zweiten Durchlaufofen, in welchem eine Temperatur in einem Bereich aufrechterhalten wird, welcher für das Aushärten des Kunststoffs bzw. des Harzes ausreicht. Dies ist in der Regel ein Bereich zwischen etwa 140 und 160° C. Auch der zweite Durchlaufofen kann, wie dargestellt, in einzelne Behandlungseinheiten unterteilt sein, deren Temperatur jeweils individuell einregelbar ist, um beim Durchlaufen der Abpreßform 1 mit dem Vorformling ein vorgegebenes Temperaturprofil zu schaffen. Nach dem Aushärten des Bauteils in der Abpreßform 1 erfolgt eine Abkühlung derselben bei G auf eine Temperatur, bei welcher die Abpreßform 1 dann bei H geöffnet und der Achslenker bzw. die Achsfeder bei K aus der Abpreßform 1 entnommen werden kann. Nach einer Kontrolle bei L erfolgt eine mechanische Bearbeitung und Montage des Bauteils bei N. Hieran kann sich in einer besonderen Anlag bei M ein Nachtempern des Bauteils anschließen. Die frei gewordene Abpreßform 1 wandert von der Position I wieder in die eingangs erwähnte Position Y zurück, wo sie nach Reinigen und Vorwärmen wieder in den Umlaufzyklus für einen neuen Verfahrensgang gebracht wird.

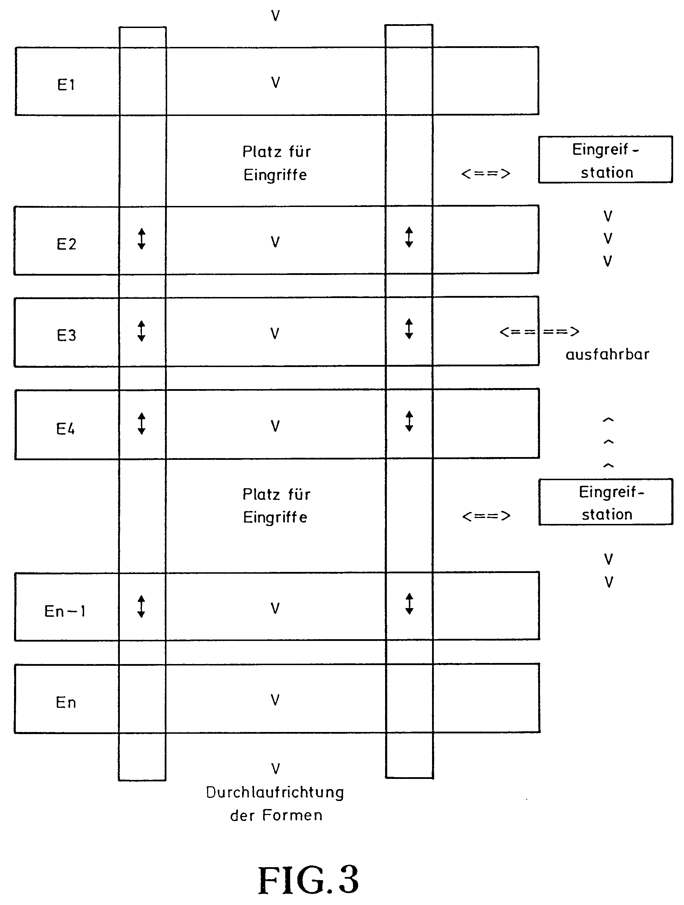

In Fig. 3 ist veranschaulicht, wie eine Vorwärmeinheit E1, einzelne Behandlungseinheiten E2 bis En-1, und eine Abkühleinheit En in Durchlaufrichtung der Durchlaufstrecke für die Abpreßform 1 gegeneinander verschoben werden können, um dadurch individuellen Platz für manuelle und automatische Eingriffe mittels einfahrbarer Eingreifstation, z.B. zum Nachspannen der Abpreßform 1 zu, schaffen. Bei der einen Behandlungseinheit E3 ist durch Doppelpfeil ferner angedeutet, daß derartige Behandlungseinheiten bspw. auch seitlich aus der Durchlaufstrecke herausgefahren werden können, wenn sie in dem vorgesehenen Durchlauf nicht benötigt werden und an dieser Stelle bspw. Platz für andere Behandlungseinheit oder einen sonstigen Verfahrensschritt geschaffen werden soll. Hierdurch ist eine noch bessere individuelle Anpassung der Anlage an die jeweils im Verfahrensablauf einzuhaltenden Temperatur- und Druckparameter in Anpassung an die verwendeten Materialien, Materialstärken und Formen der herzustellenden Bauteile möglich.

Bezugszeichenliste:

| | |
|---|---|
| 1 | Abpreßform |
| 2 | Formunterteil |
| 3 | Vorformling |
| 4 | Formoberteil |
| E1 | Vorwärmeinheit |
| E2 bis En-1 | Behandlungseinheiten |
| En | Abkühleinheit |

**Patentansprüche**

1. Anlage zur Herstellung von Achsfedern, Achslenkern od. dgl. Fahrzeugbauteilen aus Faserverbundwerkstoffen mit wenigstens folgenden Verfahrensschritten:

- Vorwärmen einer ein die Unterkontur des Bauteils bestimmendes Formunterteil und ein die Oberkontur des Bauteils bestimmendes, mit veränderlichem Druck diesem gegenüber spannbares Formoberteil aufweisenden Abpreßform auf eine Vorwärmtemperatur,

- Einlegen eines z.B. aus kunststoffimprägnierten Glasfaser bändern hergestellten Vorformlings in die vorgewärmte Abpreßform,

- Spannen des Formoberteils gegenüber dem in dem Formunterteil eingelegten Vorformling auf einen vorgegebenen, vorzugsweise über einen bestimmten Setzweg im wesentlichen konstanten ersten Druck,

- Erwärmen der Abpreßform mit dem eingelegten Vorformling, z.B. unter Aufrechterhaltung des ersten Druckes, in einem ersten Ofen auf eine vorgegebene Abpreßtemperatur bis zu einer ausreichend niedrigen Viskosität des Kunststoffs,

- Nachspannen des Formoberteils gegenüber dem Vorformling auf einen vorgegebenen, mit dem ersten Druck im wesentlichen gleichen oder gegenüber dem ersten Druck erhöhten, vorzugsweise über einen bestimmten Setzweg im wesentlichen konstanten zweiten Druck, und

- Erwärmen der Abpreßform mit dem bereits erwärmten Vorformling, z.B. unter Aufrechterhaltung des zweiten Druckes, in einem zweiten Ofen auf eine vorgegebene, gegenüber der Abpreßtemperatur erhöhten Aushärtetemperatur,

dadurch gekennzeichnet, daß wenigstens der erste und der zweite Ofen als Durchgangsofen ausgebildet und auf einer Durchlaufstrecke für die Abpreßform in Durchlaufrichtung hintereinander und gegeneinander verschiebbar angeordnet sind.

2. Anlage nach Anspruch 1, dadurch gekennzeichnet, daß der erste und/oder der zweite Ofen in einzeln steuerbare Behandlungseinheiten unterteilt sind/ist.

3. Anlage nach Anspruch 2, dadurch gekennzeichnet, daß die Behandlungseinheiten in Durchlaufrichtung gegeneinander verschiebbar angeordnet sind.

4. Anlage nach einem der Ansprüche 1 bis 2, dadurch gekennzeichnet, daß dem letzten Ofen bzw. der letzten Behandlungseinheit in Durchlaufrichtung der Durchlaufstrecke eine Abkühleinheit oder mehrere Abkühleinheiten nachgeordnet ist bzw. sind.

5. Anlage nach einem der Ansprüche 1 bis 4, dadurch gekennzeichnet, daß dem ersten Ofen bzw. der ersten Behandlungseinheit in Durchlaufrichtung der Durchlaufstrecke eine Vorwärmeinheit oder mehrere Vorwärmeinheiten vorgeschaltet ist bzw. sind.

6. Anlage nach einem der Ansprüche 1 bis 5, dadurch gekennzeichnet, daß die Öfen und/oder die Behandlungseinheiten und/oder die Abkühleinheiten und/oder die Vorwärmeinheiten aus der Durchlaufstrecke - vorzugsweise seitlich - herausverfahrbar angeordnet sind.

7. Anlage nach einem der Ansprüche 1 bis 6, dadurch gekennzeichnet, daß der erste Ofen und/oder die den ersten Ofen bildenden Behandlungseinheiten auf eine Abpreßtemperatur zwischen etwa 100 und 140° C einregelbar ist bzw. sind.

8. Anlage nach einem der Ansprüche 1 bis 7, dadurch gekennzeichnet, daß der zweite Ofen und/oder die den zweiten Ofen bildenden Behandlungseinheiten auf eine Aushärtetemperatur zwischen etwa 140 und 160° C einregelbar ist bzw. sind.

9. Anlage nach einem der Ansprüche 5 bis 8, dadurch gekennzeichnet, daß die Vorwärmeinheit(en) auf eine Temperatur zwischen etwa 80° und 100° C einregelbar ist (sind).

EP 0 474 030 A2

# FIG.1

| (X) | Haspelanlage |
|-----|--------------|

# FIG.2

V (A) (A*)

| Wickel in Form einlegen | Form schließen |
|---|---|

(B) | V |

| Form reinigen und vorwärmen | (Y) |

| Vor- wärmen |

(C) Nachspannen

(K)

| Lenker entnehmen | (I) |

(D) | Vor- wärmen |

V
Kontrolle (L)
V
Mechanische Bearbeitung und Montage
(N)
V

| Form öffnen | (H) |

(E) Form nachspannen
V

| Ab- kühlen | (G) |

(F) | Aus- härten |

> V
Nachtempern der entformten Achslenker bzw. Federn
(M)

6

V

| | | V | | |
|---|---|---|---|---|
| E1 | | V | | |

Platz für
Eingriffe                    <==>          | Eingreif-
                                              station |

| E2 | ↕ | V | ↕ | |

V
V
V

| E3 | ↕ | V | ↕ | |

<== ==>

ausfahrbar

| E4 | ↕ | V | ↕ | |

∧
∧
∧

Platz für
Eingriffe                    <==>          | Eingreif-
                                              station |

V
V

| En-1 | ↕ | V | ↕ | |

| En | | V | | |

V
Durchlaufrichtung
der Formen

# FIG.3